# EUROPEAN PATENT APPLICATION

(11) **EP 3 547 673 A1**
(43) Date of publication of application: **02.10.2019**
(21) Application number: 19155728.9
(22) Date of filing: 06.02.2019
(51) Int. Cl.: H04N 7/14

(54) **IMAGE PROCESSING APPARATUS, VIDEOCONFERENCE SYSTEM, IMAGE PROCESSING METHOD, AND CARRIER MEANS**

(30) Priority: 30.03.2018 JP 2018070390
(71) Applicant: Ricoh Company, Ltd., Tokyo 143-8555 (JP)
(72) Inventor: KUWATA, Koji, Tokyo, 143-8555 (JP)
(74) Representative: SSM Sandmair

(57) **Abstract**

An image processing apparatus (100) includes: an image obtaining unit (122) to obtain a video image; a specific-region detecting unit (126) to detect a specific region in the video image; and an image processing unit (124) to make an image quality of a region other than the specific region in the video image lower than an image quality of the specific region, and to make an image quality of a boundary part between the specific region and the other region in the video image lower than the image quality of the specific region and higher than the image quality of the other region.

## Description

### BACKGROUND

### Technical Field

The present invention relates to an image processing apparatus, a videoconference system, an image processing method, and carrier means.

### Description of the Related Art

Japanese Unexamined Patent Application Publication No. 2017-163228 discloses a technique for making the image quality of an image of a static region in which motion is not detected lower and making the image quality of an image of a motion region in which motion is detected (for example, a region in which motion of a person is detected) higher than that of the image of the static region in an image captured by a monitoring camera. With this technique, the encoded data size of the captured image can be decreased, thereby reducing the load of a transmission line in a network and increasing the visibility of the image of the motion region.

However, the above-described technique has a drawback in that, when the image quality of a partial region in a video image is made lower to divide the video image into a low-image-quality region and a high-image-quality region as described above, the difference in image quality between the two regions becomes noticeable, which may feel unnatural to a viewer.

### SUMMARY

Example embodiments include an image processing apparatus including: an image obtaining unit to obtain a video image; a specific-region detecting unit to detect a specific region in the video image; and an image processing unit to make an image quality of a region other than the specific region in the video image lower than an image quality of the specific region, and to make an image quality of a boundary part between the specific region and the other region in the video image lower than the image quality of the specific region and higher than the image quality of the other region.

Other example embodiments include a videoconference system including a plurality of communication terminals, with at least one of the plurality of communication terminals being the above-described image processing apparatus.

Other example embodiments include an image processing method performed by the above-described image processing apparatus, and a control program that causes a computer system to perform the image processing method.

According to one or more embodiments of the present invention, the data amount of video data can be reduced, and a difference in image quality between a plurality of regions can be made less noticeable.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating a system configuration of a videoconference system according to an embodiment of the present invention;
FIG. 2 is a diagram illustrating an external view of an interactive whiteboard (IWB) according to an embodiment of the present invention;
FIG. 3 is a diagram illustrating a hardware configuration of the IWB according to an embodiment of the present invention;
FIG. 4 is a diagram illustrating a functional configuration of the IWB according to an embodiment of the present invention;
FIG. 5 is a flowchart illustrating a procedure of videoconference holding-controlling processing performed by the IWB according to an embodiment of the present invention;
FIG. 6 is a flowchart illustrating a procedure of video processing performed by a video processing unit according to an embodiment of the present invention;
FIG. 7 is a flowchart illustrating a procedure of motion detection processing performed by a motion region detecting unit according to an embodiment of the present invention;
FIG. 8 is a diagram illustrating a specific example of the motion detection processing performed by the motion region detecting unit according to an embodiment of the present invention; and
FIG. 9 is a diagram illustrating a specific example of the video processing performed by the video processing unit according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, one or more embodiments of the present invention will be described with reference to the drawings.

### System Configuration of Videoconference System

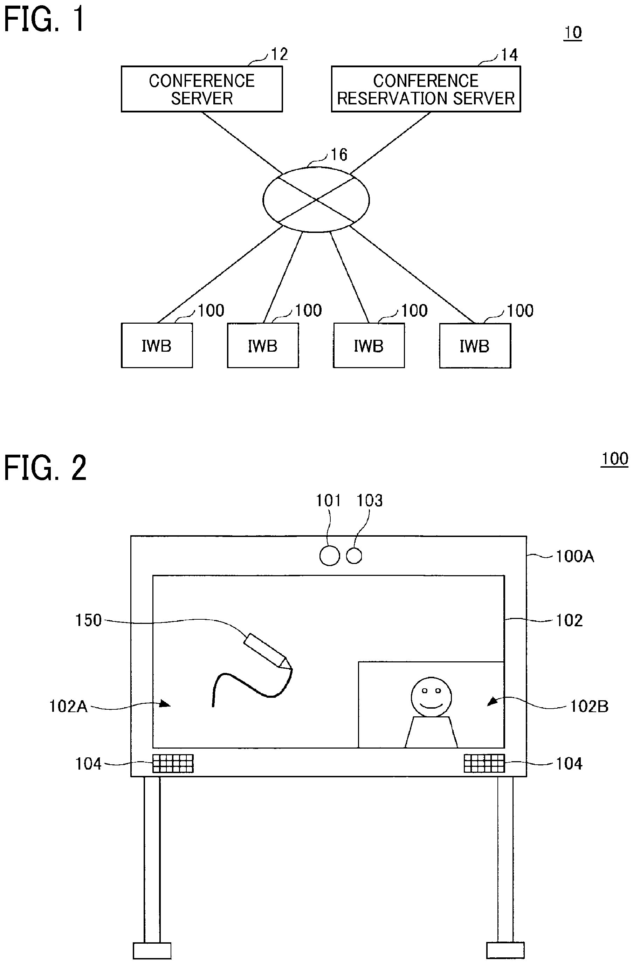

FIG. 1 is a diagram illustrating a system configuration of a videoconference system 10 according to an embodiment of the present invention. As illustrated in FIG. 1, the videoconference system 10 includes a conference server 12, a conference reservation server 14, and a plurality of IWBs 100, and these apparatuses are connected to a network 16, which is the Internet, an intranet, or a local area network (LAN). The videoconference system 10 enables a videoconference between a plurality of sites by using these apparatuses.

The conference server 12 is an example of "server apparatus". The conference server 12 performs various types of control for a videoconference held by using the plurality of IWBs 100. For example, at the start of a videoconference, the conference server 12 monitors the communication connection state between each IWB 100 and the conference server 12, calls each IWB 100, etc. During a videoconference, the conference server 12 performs transfer processing for transferring various types of data (for example, video data, audio data, drawing data, etc.) between the plurality of IWBs 100, etc.

The conference reservation server 14 manages the reservation states of videoconferences. Specifically, the conference reservation server 14 manages conference information input from an external information processing apparatus (for example, a personal computer (PC), etc.) via the network 16. The conference information includes, for example, the date and time of the conference to be held, the venue for the conference, participants, roles, and terminals to be used. The videoconference system 10 holds a videoconference in accordance with the conference information managed by the conference reservation server 14.

The IWB 100 is an example of "image processing apparatus", which operates in one example as "communication terminal". The IWB 100 is a communication terminal that is placed at each site where a videoconference is held and used by a participant of the videoconference. For example, the IWB 100 can transmit various types of data (for example, video data, audio data, drawing data, etc.) input by a participant of the videoconference to the other IWBs 100 via the network 16 and the conference server 12. For example, the IWB 100 can output various types of data transmitted from the other IWBs 100 by using an output method (for example, display, audio output, etc.) that is suitable to the type of data to present the data to a participant of the videoconference.

### Configuration of IWB

FIG. 2 is a diagram illustrating an external view of the IWB 100 according to an embodiment of the present invention. As illustrated in FIG. 2, the IWB 100 includes a camera 101, a touch panel display 102, a microphone 103, and a speaker 104 on the front surface of a body 100A.

The camera 101 captures a video image of a scene ahead of the IWB 100. The camera 101 includes, for example, a lens, an image sensor, and a video processing circuit, such as a digital signal processor (DSP). The image sensor performs photoelectric conversion of light concentrated by the lens to generate video data (raw data). As the image sensor, for example, a charge-coupled device (CCD) image sensor or a complementary metal oxide semiconductor (CMOS) image sensor is used. The video processing circuit performs general video processing, such as Bayer conversion and 3A control (automatic exposure (AE) control, autofocus (AF), and auto-white balance (AWB)), for the video data (raw data) generated by the image sensor to generate video data (YUV data). The video processing circuit outputs the generated video data (YUV data). The YUV data represents color information by a combination of a luminance signal (Y), the difference between the luminance signal and the blue component (U), and the difference between the luminance signal and the red component (V).

The touch panel display 102 is a device that includes a display and a touch panel. The touch panel display 102 can display various types of information (for example, video data, drawing data, etc.) on the display. The touch panel display 102 can be used to input various types of information (for example, text, figures, images, etc.) by a touch operation on the touch panel with an operation body 150 (for example, a finger, a pen, etc.). As the display, for example, a liquid crystal display, an organic electroluminescent (EL) display, or electronic paper can be used. As the touch panel, for example, a capacitive touch panel can be used.

The microphone 103 collects sounds around the IWB 100, generates audio data (analog data) corresponding to the sounds, and thereafter, performs analog-to-digital conversion of the audio data (analog data) to thereby output audio data (digital data) corresponding to the collected sounds.

The speaker 104 is driven by audio data (analog data) to output sounds corresponding to the audio data. For example, the speaker 104 is driven by audio data transmitted from the IWBs 100 at the other sites to output sounds collected by the IWBs 100 at the other sites.

The IWB 100 thus configured performs video processing and encoding processing described below for video data obtained by the camera 101 to reduce the data amount, and thereafter, transmits the video data, various types of display data (for example, video data, drawing data, etc.) obtained by the touch panel display 102, and audio data obtained by the microphone 103 to the other IWBs 100 via the conference server 12 to thereby share these pieces of data with the other IWBs 100. The IWB 100 displays display content based on various types of display data (for example, video data, drawing data, etc.) transmitted from the other IWBs 100 on the touch panel display 102 and outputs sounds based on audio data transmitted from the other IWBs 100 via the speaker 104 to thereby share these pieces of information with the other IWBs 100.

For example, the example in FIG. 2 illustrates a display layout having a plurality of display regions 102A and 102B displayed on the touch panel display 102. The display region 102A is a drawing region, and drawing data input by drawing with the operation body 150 is displayed therein. In the display region 102B, a video image of the local site captured by the camera 101 is displayed. The touch panel display 102 can also display drawing data input to the other IWBs 100, video images of the other sites captured by the other IWBs 100, etc. Hardware Configuration of IWB

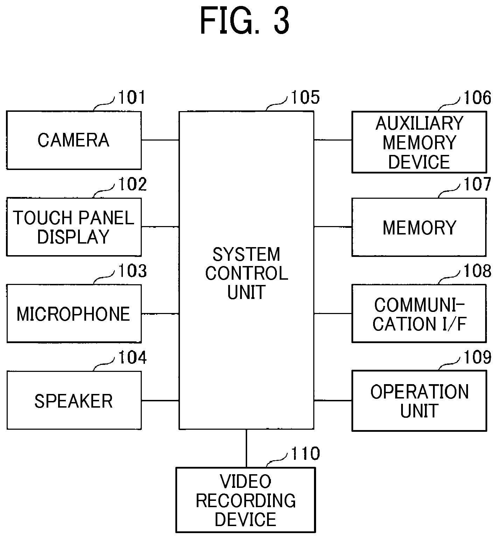

FIG. 3 is a diagram illustrating a hardware configuration of the IWB 100 according to an embodiment of the present invention. As illustrated in FIG. 3, the IWB 100 includes a system control unit 105 including a central processing unit (CPU), an auxiliary memory device 106, a memory 107, a communication interface (I/F) 108, an operation unit 109, and a video recording device 110 in addition to the camera 101, the touch panel display 102, the microphone 103, and the speaker 104 described with reference to FIG. 2.

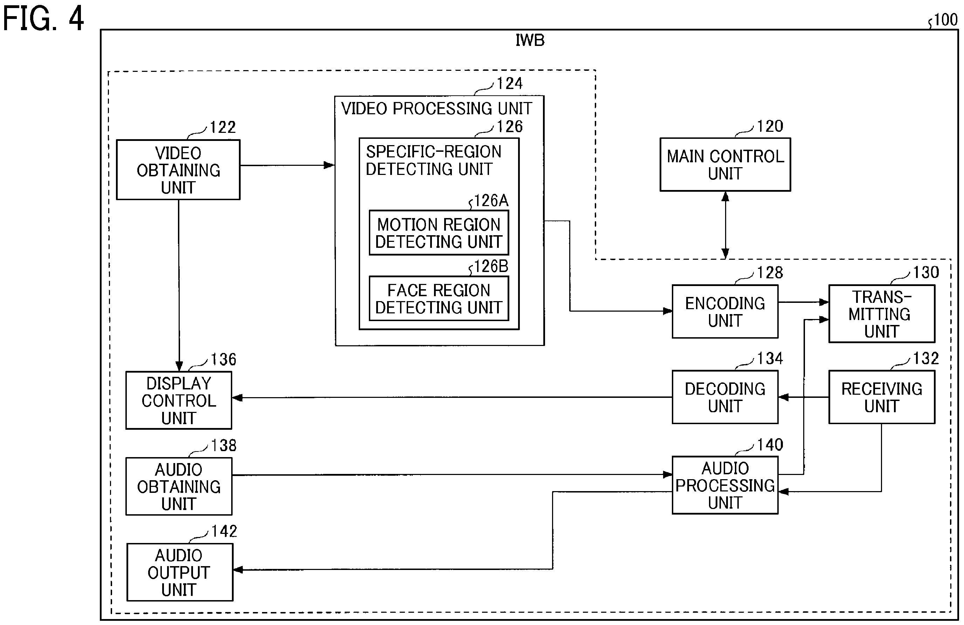

The system control unit 105 executes various programs stored in the auxiliary memory device 106 or the memory 107 to perform various types of control of the IWB 100. For example, the system control unit 105 includes the CPU, interfaces with peripheral units, and a data access arbitration function to control various hardware units included in the IWB 100 and to control execution of various videoconference-related functions (see FIG. 4) of the IWB 100.

For example, as a basic videoconference-related function, the system control unit 105 transmits video data obtained from the camera 101, drawing data obtained from the touch panel display 102, and audio data obtained from the microphone 103 to the other IWBs 100 via the communication I/F 108.

For example, the system control unit 105 displays on the touch panel display 102 a video image based on video data obtained from the camera 101 and drawing content based on drawing data (that is, video data and drawing data of the local site) obtained from the touch panel display 102.

For example, the system control unit 105 obtains video data, drawing data, and audio data transmitted from the IWBs 100 at the other sites via the communication I/F 108. Then, the system control unit 105 displays video images based on the video data and drawing content based on the drawing data on the touch panel display 102 and outputs sounds based on the audio data from the speaker 104.

The auxiliary memory device 106 stores various programs that are executed by the system control unit 105, data used in execution of various programs by the system control unit 105, etc. As the auxiliary memory device 106, for example, a nonvolatile memory device, such as a flash memory or a hard disk drive (HDD), is used.

The memory 107 functions as a temporary memory area that is used when the system control unit 105 executes various programs. As the memory 107, for example, a volatile memory device, such as a dynamic random access memory (DRAM) or a static random access memory (SRAM), is used.

The communication I/F 108 is an interface for connecting the IWB 100 to the network 16 and transmitting and receiving various types of data to and from the other IWBs 100 via the network 16. As the communication I/F 108, for example, a wired LAN interface compliant with, for example, 10Base-T, 100Base-TX, or 1000Base-T, a wireless LAN interface compliant with IEEE802.11a/b/g/n, etc. can be used.

The operation unit 109 is operated by a user to perform various input operations. As the operation unit 109, for example, a keyboard, a mouse, a switch, etc. is used.

The video recording device 110 records video data and audio data of a videoconference to the memory 107. The video recording device 110 reproduces video data and audio data recorded to the memory 107.

### Functional Configuration of IWB 100

FIG. 4 is a diagram illustrating a functional configuration of the IWB100 according to an embodiment of the present invention. As illustrated in FIG. 4, the IWB 100 includes a main control unit 120, a video obtaining unit 122, a video processing unit 124, a specific-region detecting unit 126, an encoding unit 128, a transmitting unit 130, a receiving unit 132, a decoding unit 134, a display control unit 136, an audio obtaining unit 138, an audio processing unit 140, and an audio output unit 142.

The video obtaining unit 122 obtains video data (YUV data) obtained by the camera 101. The video data obtained by the video obtaining unit 122 is data formed of a combination of a plurality of frame images.

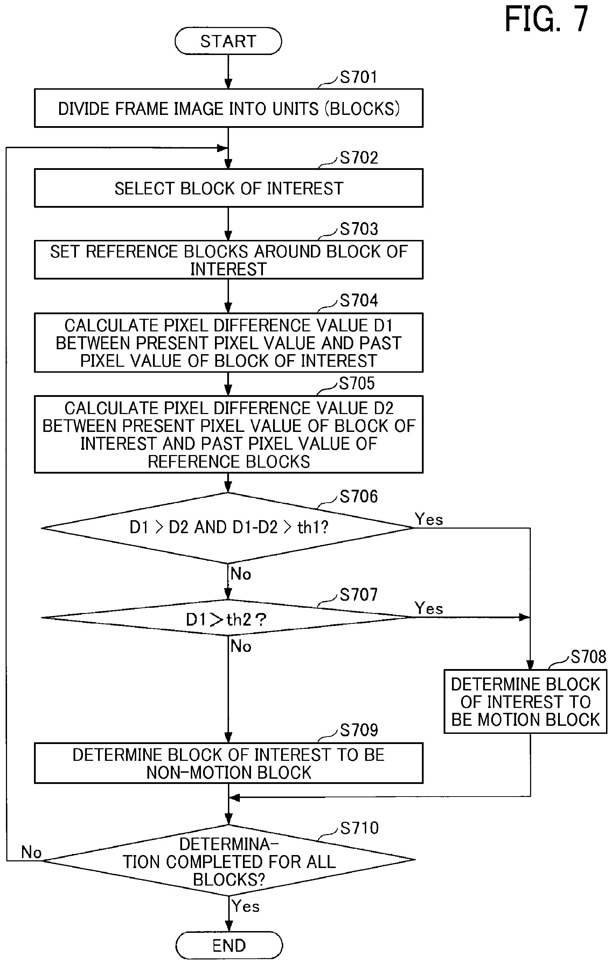

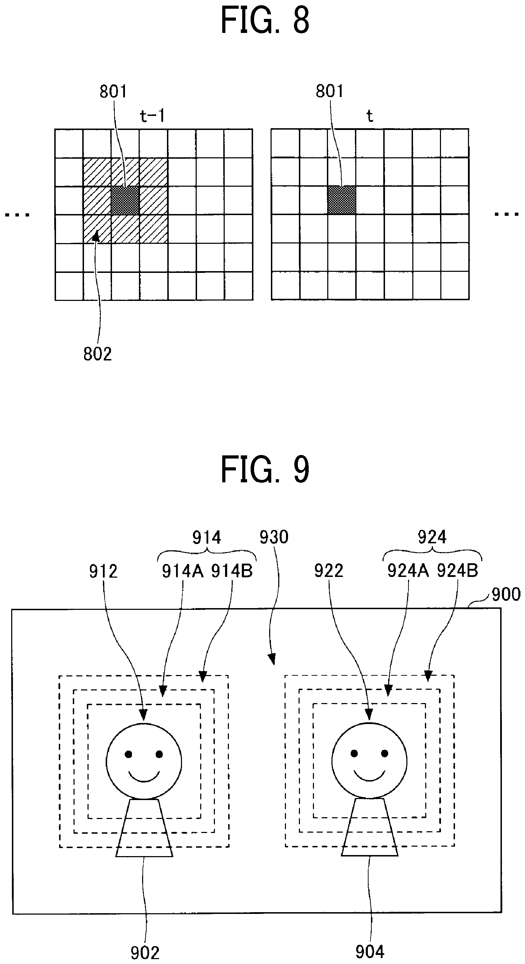

The video processing unit 124 performs various types of video processing for the video data obtained by the video obtaining unit 122. For example, the video processing unit 124 includes the specific-region detecting unit 126. The specific-region detecting unit 126 detects a specific region in the video data (frame images) obtained by the video obtaining unit 122. Specifically, the specific-region detecting unit 126 includes a motion region detecting unit 126A and a face region detecting unit 126B. The motion region detecting unit 126A detects, as a specific region, a motion region, which is a region in which motion of an object is detected, in the video data (frame images) obtained by the video obtaining unit 122. As the method for detecting a motion region, any publicly known method may be used. The details of motion detection processing performed by the motion region detecting unit 126A will be described below with reference to FIG. 7 and FIG. 8. The face region detecting unit 126B detects, as a specific region, a face region, which is a region in which the face of an object is detected, in the video data (frame images) obtained by the video obtaining unit 122. As the method for detecting a face region, any publicly known method may be used. An example of the method is a method in which feature points such as eyes, a nose, a mouth, etc. are extracted to detect a face region.

When a specific region is identified by the specific-region detecting unit 126, the video processing unit 124 makes the image quality of a region other than the specific region in the video data (frame images) obtained by the video obtaining unit 122 lower than the image quality of the specific region. Specifically, the video processing unit 124 sets the specific region in the video data (frame images) obtained by the video obtaining unit 122 as "high-image-quality region" to make the image quality of the region high. On the other hand, the video processing unit 124 sets the region other than the specific region in the video data (frame images) obtained by the video obtaining unit 122 as "low-image-quality region" to make the image quality of the region low. Further, the video processing unit 124 sets a boundary part between the specific region and the other region in the video data (frame images) obtained by the video obtaining unit 122 as "medium-image-quality region" to make the image quality of the boundary part medium. Specifically, the video processing unit 124 makes the image quality of the boundary part medium such that the image quality decreases toward the other region described above in a stepwise manner. As the method for image quality adjustment, the video processing unit 124 may use any publicly known method. For example, the video processing unit 124 can adjust the resolution and contrast of the video data, apply low-pass filtering to the video data, adjust the frame rate of the video data, etc., thereby adjusting the image quality. Note that "high-image-quality region", "medium-image-quality region", and "low-image-quality region" in this embodiment mean relative differences in image quality. That is, "high-image-quality region" means a region having an image quality higher than that of "medium-image-quality region" and that of "low-image-quality region", and "medium-image-quality region" means a region having an image quality higher than that of "low-image-quality region".

The encoding unit 128 encodes the video data obtained as a result of video processing by the video processing unit 124. Examples of an encoding scheme used by the encoding unit 128 include H.264/AVC, H.264/SVC, and H.265.

The transmitting unit 130 transmits the video data encoded by the encoding unit 128 and audio data obtained by the microphone 103 (audio data obtained as a result of audio processing by the audio processing unit 140) to the other IWBs 100 via the network 16.

The receiving unit 132 receives video data and audio data transmitted from the other IWBs 100 via the network 16. The decoding unit 134 decodes the video data received by the receiving unit 132 by using a certain decoding scheme. The decoding scheme used by the decoding unit 134 is a decoding scheme corresponding to the encoding scheme used by the encoding unit 128 (for example, H.264/AVC, H.264/SVC, or H.265).

The display control unit 136 reproduces the video data decoded by the decoding unit 134 to display video images based on the video data (that is, video images of the other sites) on the touch panel display 102. The display control unit 136 reproduces video data obtained by the camera 101 to display a video image based on the video data (that is, a video image of the local site) on the touch panel display 102. The display control unit 136 can display a plurality of types of video images using a display layout having a plurality of display regions in accordance with layout setting information set in the IWB 100. For example, the display control unit 136 can display a video image of the local site and video images of the other sites simultaneously.

The main control unit 120 controls the IWB 100 as a whole. For example, the main control unit 120 performs control to initialize each module, set the image-capture mode of the camera 101, make a communication start request to the other IWBs 100, start a videoconference, end a videoconference, make the video recording device 110 record a video image, etc.

The audio obtaining unit 138 obtains audio data from the microphone 103. The audio processing unit 140 performs various types of audio processing for the audio data obtained by the audio obtaining unit 138 and audio data received by the receiving unit 132. For example, the audio processing unit 140 performs general audio processing, such as codec processing, noise cancelling (NC) processing, etc., for the audio data received by the receiving unit 132. For example, the audio processing unit 140 performs general audio processing, such as codec processing, echo cancelling (EC) processing, etc., for the audio data obtained by the audio obtaining unit 138.

The audio output unit 142 converts the audio data received by the receiving unit 132 (the audio data obtained as a result of audio processing by the audio processing unit 140) to an analog signal to reproduce the audio data, thereby outputting sounds based on the audio data (that is, sounds of the other sites) from the speaker 104.

The functions of the IWB 100 described above are implemented by, for example, the CPU of the system control unit 105 executing a program stored in the auxiliary memory device 106. This program may be installed in advance in the IWB 100 and provided or may be externally provided and installed in the IWB 100. In the latter case, the program may be stored in an external storage medium (for example, a universal serial bus (USB) memory, a memory card, a compact disc read-only memory (CD-ROM), etc.) and provided, or may be downloaded from a server on a network (for example, the Internet) and provided. Among the functions of the IWB 100 described above, some functions (for example, the encoding unit 128, the decoding unit 134, etc.) may be implemented by using a dedicated processing circuit provided separately from the system control unit 105.

### Procedure of Videoconference Holding-Controlling Processing Performed by IWB 100

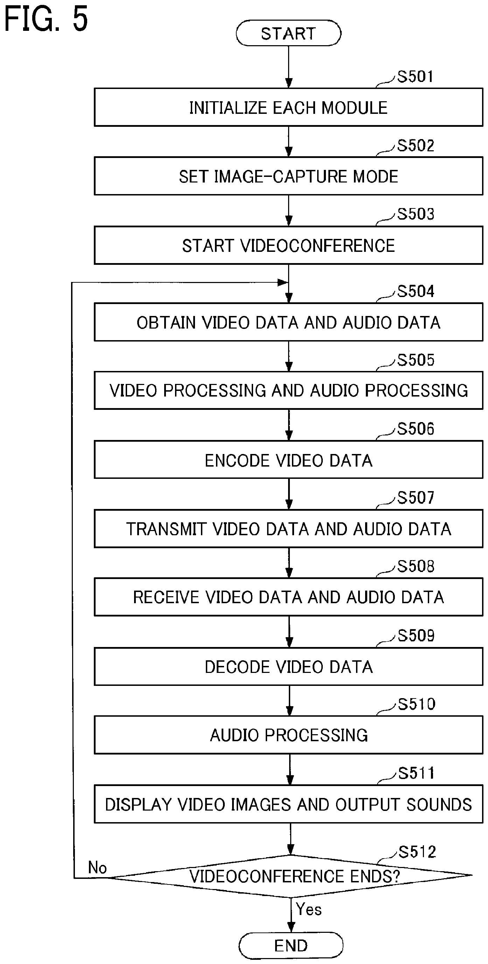

FIG. 5 is a flowchart illustrating a procedure of videoconference holding-controlling processing performed by the IWB 100 according to an embodiment of the present invention.

First, the main control unit 120 initializes each module so as to be ready for image capturing by the camera 101 (step S501). Next, the main control unit 120 sets the image-capture mode of the camera 101 (step S502). Setting of the image-capture mode by the main control unit 120 can include automatic setting based on output from various sensors and manual setting performed by an operator inputting an operation. Then, the main control unit 120 makes a communication start request to the IWBs 100 at the other sites to start a videoconference (step S503). The main control unit 120 may start a videoconference in response to a communication start request from another IWB 100. Simultaneously with the start of the videoconference, the main control unit 120 may start video and audio recording by the video recording device 110.

When the videoconference starts, the video obtaining unit 122 obtains video data (YUV data) from the camera 101, and the audio obtaining unit 138 obtains audio data from the microphone 103 (step S504). Then, the video processing unit 124 performs video processing for the video data obtained in step S504, and the audio processing unit 140 performs various types of audio processing for the audio data obtained in step S504 (step S505). The encoding unit 128 encodes the video data obtained as a result of video processing in step S505 (step S506). Then, the transmitting unit 130 transmits the video data encoded in step S506 and the audio data obtained in step S504 to the other IWBs 100 via the network 16 (step S507).

In parallel to steps S504 to S507, the receiving unit 132 receives video data and audio data transmitted from the other IWBs 100 via the network 16 (step S508). Then, the decoding unit 134 decodes the video data received in step S508 (step S509). The audio processing unit 140 performs various types of audio processing for the audio data received in step S508 (step S510). The display control unit 136 displays video images based on the video data decoded in step S509 on the touch panel display 102, and the audio output unit 142 outputs sounds based on the audio data obtained as a result of audio processing in step S510 from the speaker 104 (step S511). In step S511, the display control unit 136 can further display a video image based on the video data obtained in step S504 (that is, a video image of the local site) on the touch panel display 102.

Subsequently, the main control unit 120 determines whether the videoconference has ended (step S512). If it is determined in step S512 that the videoconference has not ended (No in step S512), the IWB 100 returns the processing to step S504. On the other hand, if it is determined in step S512 that the videoconference has ended (Yes in step S512), the IWB 100 ends the series of processing illustrated in FIG. 5.

### Procedure of Video Processing Performed by Video Processing Unit 124

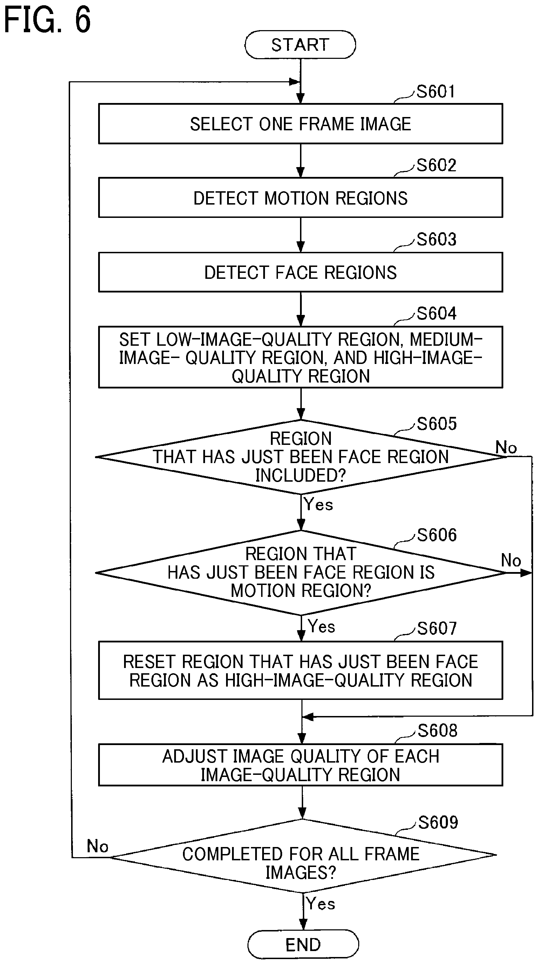

FIG. 6 is a flowchart illustrating a procedure of video processing performed by the video processing unit 124 according to an embodiment of the present invention.

First, the video processing unit 124 selects one frame image from among a plurality of frame images constituting video data in order from oldest to newest (step S601). Next, the motion region detecting unit 126A detects one or more motion regions, each of which is a region in which motion of an object is detected, from the one frame image selected in step S601 (step S602). The face region detecting unit 126B detects one or more face regions, each of which is a region in which the face of an object is detected, from the one piece of video data, which is obtained by the video obtaining unit 122 (step S603). At this time, the face region detecting unit 126B may determine a region in which a face is detected over a predetermined number of successive frame images to be a face region in order to prevent erroneous detection.

Then, the video processing unit 124 sets, on the basis of the result of detection of the one or more face regions in step S603, the low-image-quality region, the medium-image-quality region, and the high-image-quality region for the one frame image selected in step S601 (step S604). Specifically, the video processing unit 124 sets each face region as the high-image-quality region. The video processing unit 124 sets a region other than the one or more face regions as the low-image-quality region. The video processing unit 124 sets the boundary part between the high-image-quality region and the low-image-quality region as the medium-image-quality region.

Subsequently, the video processing unit 124 determines whether the low-image-quality region (that is, the region in which no face is detected) set in step S604 includes a region that has just been a face region (step S605). For example, the video processing unit 124 stores the result of detecting one or more face regions in the previous frame image in the memory 107 and refers to the detection result to thereby determine whether a region that has just been a face region is included.

If it is determined in step S605 that a region that has just been a face region is not included (No in step S605), the video processing unit 124 advances the processing to step S608. On the other hand, if it is determined in step S605 that a region that has just been a face region is included (Yes in step S605), the video processing unit 124 determines whether the region that has just been a face region corresponds to one of the motion regions detected in step S602 (step S606).

If it is determined in step S606 that the region that has just been a face region does not correspond to any of the motion regions detected in step S602 (No in step S606), the video processing unit 124 advances the processing to step S608. On the other hand, if it is determined in step S606 that the region that has just been a face region corresponds to one of the motion regions detected in step S602 (Yes in step S606), the video processing unit 124 resets the region as the high-image-quality region (step S607). This is because the region is highly likely a region in which a face is present but is not detected because, for example, the orientation of the face changes. At the same time, the video processing unit 124 resets the boundary part between the region and the low-image-quality region as the medium-image-quality region. Then, the video processing unit 124 advances the processing to step S608.

In step S608, the video processing unit 124 makes an image-quality adjustment for each of the regions set as the low-image-quality region, the medium-image-quality region, and the high-image-quality region in step S604 and S607 so as to have corresponding image qualities. For example, the video processing unit 124 maintains the original image quality of the region set as the high-image-quality region. For the regions set as the medium-image-quality region and the low-image-quality region, the video processing unit 124 uses some publicly known image-quality adjustment method (for example, a resolution adjustment, a contrast adjustment, low-pass filtering application, a frame rate adjustment, etc.) to decrease the image quality of each of the regions from the original image quality thereof so that the region set as the medium-image-quality region has a medium image quality and the region set as the low-image-quality region has a low image quality. At this time, the video processing unit 124 makes the boundary part set as the medium-image-quality region have a medium image quality such that the image quality of the boundary part decreases toward the region set as the low-image-quality region in a stepwise manner. Accordingly, the difference in image quality between the high-image-quality region and the low-image-quality region can be made less noticeable.

Thereafter, the video processing unit 124 determines whether the above-described video processing has been performed for all of the frame images that constitute the video data (step S609). If it is determined in step S609 that the video processing has not been performed for all of the frame images (No in step S609), the video processing unit 124 returns the processing to step S601. On the other hand, if it is determined in step S609 that the video processing has been performed for all of the frame images (Yes in step S609), the video processing unit 124 ends the series of processing illustrated in FIG. 6.

Prior to step S605, the video processing unit 124 may determine whether the number of regions in which a face is detected changes (specifically, whether the number of persons decreases), and may advance the processing to step S605 if the number of regions in which a face is detected changes or may advance the processing to step S608 if the number of regions in which a face is detected does not change. If the number of regions in which a face is detected changes, it is highly likely that "a region in which a face is not detected but that has just been a face region" is present.

### Procedure of Motion Detection Processing Performed by Motion Region Detecting Unit 126A

FIG. 7 is a flowchart illustrating a procedure of motion detection processing performed by the motion region detecting unit 126A according to an embodiment of the present invention. The processing illustrated in FIG. 7 is motion detection processing that is performed by the motion region detecting unit 126A for each frame image. In the processing illustrated in FIG. 7, a past frame image is checked, and therefore, the processing illustrated in FIG. 7 assumes that a past frame image is stored in the memory 107.

First, the motion region detecting unit 126A divides a frame image into units, namely, blocks (step S701). Although each block may have any size, for example, the motion region detecting unit 126A divides the frame image into units, namely, blocks each formed of 8 × 8 pixels. Accordingly, the resolution of the frame image is made lower. The motion region detecting unit 126A may perform various types of conversion processing (for example, gamma conversion processing, frequency transformation processing, such as a fast Fourier transform (FFT), etc.) for each block to facilitate motion detection.

Next, the motion region detecting unit 126A selects one block from among the plurality of blocks as a block of interest (step S702). Then, the motion region detecting unit 126A sets blocks around the block of interest selected in step S702 as reference blocks (step S703). Although the area in which blocks are set as the reference blocks is determined in advance, the area is used to detect motion of a person for each frame, and therefore, it is sufficient to use a relatively narrow area as the area of the reference blocks.

Next, the motion region detecting unit 126A calculates the pixel difference value D1 between the present pixel value of the block of interest and a past pixel value of the block of interest (for example, the pixel value of the block of interest in the immediately preceding frame image) (step S704). The motion region detecting unit 126A calculates the pixel difference value D2 between the present pixel value of the block of interest and a past pixel value of the reference blocks (for example, the pixel value of the reference blocks in the immediately preceding frame image) (step S705). At this time, as the past pixel value of the reference blocks, the motion region detecting unit 126A may use a value obtained by averaging the pixel values of the plurality of reference blocks for each color (for example, red, green, and blue).

Next, the motion region detecting unit 126A determines whether condition 1 below is satisfied (step S706).

### Condition 1

### Pixel difference value D1 > Pixel difference value D2 and

### Pixel difference value D1 - Pixel difference value D2 ≥ Predetermined threshold th1

If it is determined in step S706 that condition 1 above is satisfied (Yes in step S706), the motion region detecting unit 126A determines the block of interest to be a motion block (step S708) and advances the processing to step S710. Condition 1 above is used to determine whether the degree of correlation between the present block of interest and the past reference blocks is higher than the degree of correlation between the present block of interest and the past block of interest. In a case where the degree of correlation between the present block of interest and the past reference blocks is higher, the block of interest is highly likely to be a motion block.

On the other hand, if it is determined in step S706 that condition 1 above is not satisfied (No in step S706), the motion region detecting unit 126A determines whether condition 2 below is satisfied (step S707).

### Condition 2

### Pixel difference value D1 ≥ Predetermined threshold th2

If it is determined in step S707 that condition 2 above is satisfied (Yes in step S707), the motion region detecting unit 126A determines the block of interest to be a motion block (step S708) and advances the processing to step S710. Condition 2 above is used to determine whether the difference between the pixel value of the present block of interest and the pixel value of the past block of interest is large. In a case where the difference between the pixel value of the present block of interest and the pixel value of the past block of interest is large, the block of interest is highly likely to be a motion block.

On the other hand, if it is determined in step S707 that condition 2 above is not satisfied (No in step S707), the motion region detecting unit 126A determines the block of interest to be a non-motion block (step S709) and advances the processing to step S710.

In step S710, the motion region detecting unit 126A determines whether determination as to whether a block is a motion block or a non-motion block has been performed for all of the blocks. If it is determined in step S710 that determination as to whether a block is a motion block or a non-motion block has not been performed for all of the blocks (No in step S710), the motion region detecting unit 126A returns the processing to step S702. On the other hand, if it is determined in step S710 that determination as to whether a block is a motion block or a non-motion block has been performed for all of the blocks (Yes in step S710), the motion region detecting unit 126A ends the series of processing illustrated in FIG. 7.

### Specific Example of Motion Detection Processing Performed by Motion Region Detecting Unit 126A

FIG. 8 is a diagram illustrating a specific example of the motion detection processing performed by the motion region detecting unit 126A according to an embodiment of the present invention.

The example in FIG. 8 illustrates a frame image t and a frame image t-1 included in video data. In the example illustrated in FIG. 8, the frame image t and the frame image t-1 are each divided into 6 × 7 blocks by the motion region detecting unit 126A, and one block (the solidly filled block in FIG. 8) in the frame image t is selected as a block of interest 801.

As illustrated in FIG. 8, the motion region detecting unit 126A sets a plurality of blocks (the hatched blocks in FIG. 8) around the block of interest 801 in the frame image t-1 as reference blocks 802.

For example, the motion region detecting unit 126A calculates the pixel difference value D1 between the pixel value of the block of interest 801 in the frame image t and the pixel value of the block of interest 801 in the frame image t-1. The pixel difference value D1 represents the degree of correlation between the block of interest 801 in the frame image t and the block of interest 801 in the frame image t-1.

The motion region detecting unit 126A calculates the pixel difference value D2 between the pixel value of the block of interest 801 in the frame image t and the pixel value of the reference blocks 802 (for example, the average of the pixel values of the plurality of reference blocks 802) in the frame image t-1. The pixel difference value D2 represents the degree of correlation between the block of interest 801 and the reference blocks 802.

In a case where it is determined on the basis of condition 1 above that the degree of correlation between the block of interest 801 and the reference blocks 802 is higher than the degree of correlation between the block of interest 801 in the frame image t and the block of interest 801 in the frame image t-1, the motion region detecting unit 126A determines the block of interest 801 to be a motion block. In a case where it is determined on the basis of condition 2 above that the difference in pixel value between the block of interest 801 in the frame image t and the block of interest 801 in the frame image t-1 is large, the motion region detecting unit 126A determines the block of interest 801 to be a motion block.

The motion region detecting unit 126A selects each of the blocks as the block of interest and performs motion determination in a similar manner to determine whether the block is a motion block or a non-motion block.

### Specific Example of Video Processing Performed by Video Processing Unit 124

FIG. 9 is a diagram illustrating a specific example of the video processing performed by the video processing unit 124 according to an embodiment of the present invention. FIG. 9 illustrates a frame image 900, which is an example frame image transmitted from the IWB 100. As illustrated in FIG. 9, in the frame image 900, persons 902 and 904 are present as objects. In the frame image 900, regions in which the faces of the respective persons 902 and 904 are present are detected as face detection regions 912 and 922. In the frame image 900, the region other than the face detection regions 912 and 922 is the other region 930, and the boundary part between the face detection region 912 and the other region 930 and the boundary part between the face detection region 922 and the other region 930 are boundary parts 914 and 924 respectively. The boundary parts 914 and 924 may be set in the face detection regions 912 and 922 respectively, may be set outside the face detection regions 912 and 922 respectively (that is, in the other region 930), or may be set so as to extend over the face detection region 912 and the other region 930 and over the face detection region 922 and the other region 930 respectively.

For the frame image 900 as described above, the video processing unit 124 sets the face detection regions 912 and 922 as "high-image-quality regions" and makes the image qualities of the face detection regions 912 and 922 high. For example, in a case where the original image quality of the frame image 900 is high, the video processing unit 124 keeps the image qualities of the face detection regions 912 and 922 high. However, the processing is not limited to this, and the video processing unit 124 may make the image qualities of the face detection regions 912 and 922 higher than the original image quality.

The video processing unit 124 sets the other region 930 as "low-image-quality region" and makes the image quality of the other region 930 low. For example, in the case where the original image quality of the frame image 900 is high, the video processing unit 124 makes the image quality of the other region 930 lower than the original image quality. As the method for lowering the image quality used at this time, any publicly known method may be used. Examples of the method include a resolution adjustment, a contrast adjustment, low-pass filtering application, a frame rate adjustment, etc.

Further, the video processing unit 124 sets the boundary parts 914 and 924 as "medium-image-quality regions" and makes the image qualities of the boundary parts 914 and 924 medium. For example, in the case where the original image quality of the frame image 900 is high, the video processing unit 124 makes the image qualities of the boundary parts 914 and 924 lower than the original image quality. As the method for lowering the image quality used at this time, any publicly known method may be used. Examples of the method include a resolution adjustment, a contrast adjustment, low-pass filtering application, a frame rate adjustment, etc. However, the video processing unit 124 makes the image qualities of the boundary parts 914 and 924 higher than the image quality of the other region 930.

Specifically, the video processing unit 124 makes the image qualities of the boundary parts 914 and 924 medium such that the image qualities decrease toward the other region 930 in a stepwise manner. In the example illustrated in FIG. 9, the video processing unit 124 divides the boundary part 914 into a first region 914A and a second region 914B and divides the boundary part 924 into a first region 924A and a second region 924B. The video processing unit 124 makes the image quality of each region of the boundary part 914 medium such that the second region 914B close to the other region 930 has an image quality lower than the image quality of the first region 914A close to the face detection region 912, and makes the image quality of each region of the boundary part 924 medium such that the second region 924B close to the other region 930 has an image quality lower than the image quality of the first region 924A close to the face detection region 922.

As a result of the video processing described above, the image quality of the frame image 900 has magnitude relations as follows.
Face detection region 912 > First region 914A > Second region 914B > Other region 930
Face detection region 922 > First region 924A > Second region 924B > Other region 930

That is, in the frame image 900, the image quality of each of the boundary parts 914 and 924, which is a region between the high-image-quality region and the low-image-quality region, decreases toward the low-image-quality region in a stepwise manner. Accordingly, in the frame image 900, the difference in image quality between the high-image-quality region and the low-image-quality region becomes less noticeable.

In the example illustrated in FIG. 9, the image qualities of the boundary parts 914 and 924 are made lower toward the low-image-quality region in two steps; however, the number of steps is not limited to two. The image qualities of the boundary parts 914 and 924 may be made lower toward the low-image-quality region in three or more steps. Alternatively, the image qualities of the boundary parts 914 and 924 need not be made lower in a stepwise manner.

In the example illustrated in FIG. 9, the image qualities of the parts around the face detection regions 912 and 922 in the frame image 900 are spatially made lower in a stepwise manner. In addition to or instead of this processing, the image qualities of the parts around the face detection regions 912 and 922 in the frame image 900 may be temporally made lower in a stepwise manner. For example, the video processing unit 124 may change the image quality of the other region 930 in the frame image 900 from the original image quality to a low image quality in N steps (where N ≥ 2) for every n frames (where n ≥ 1). Similarly, the video processing unit 124 may change the image qualities of the boundary parts 914 and 924 in the frame image 900 from the original image quality to a medium image quality in N steps (where N ≥ 2) for every n frames (where n ≥ 1). Accordingly, in the frame image 900, the difference in image quality between the high-image-quality region and the low-image-quality region further becomes less noticeable.

As described above, in the IWB 100 according to this embodiment, the image quality of a region other than a specific region in a video image captured by the camera 101 is made lower than the image quality of the specific region, and the image quality of the boundary part between the specific region and the other region in the video image is made lower toward the other region in a stepwise manner. Accordingly, with the IWB 100 according to this embodiment, a video image captured by the camera 101 can be a video image in which the image quality changes from the specific region toward the other region in a stepwise manner. Consequently, with the IWB 100 according to this embodiment, the image quality of a partial region in a video image is made lower, so that the data amount of video data can be reduced, and a difference in image quality between a plurality of regions can be made less noticeable.

Specifically, in the IWB 100 according to this embodiment, the resolution of a partial region is made lower for video data before encoding, and therefore, the data size of encoded data can be reduced without changing encoding processing and decoding processing in each of the IWB 100 that is a transmission source and the IWB 100 that is a transmission destination while the difference in image quality between a plurality of regions becomes less noticeable.

In the IWB 100 according to this embodiment, for a region in which a face that has just been detected is not detected temporarily because of, for example, a change in the orientation of the face, the image quality of the region is kept high. Accordingly, it is possible to prevent the image quality of the region from frequently switching, and unnaturalness caused by switching of the image quality can be suppressed.

An embodiment of the present invention has been described in detail; however, the present invention is not limited to this embodiment, and various modifications and changes can be made without departing from the spirit of the present invention stated in the claims.

In the embodiment described above, although the IWB 100 (electronic whiteboard) is described as an example of "image processing apparatus" or more specifically "communication terminal", the IWB 100 is not limited to this. For example, the functions of the IWB 100 described in the embodiment above may be implemented by using another information processing apparatus (for example, a smartphone, a tablet terminal, a laptop PC, etc.) provided with an image capturing device or may be implemented by using another information processing apparatus (for example, a PC, etc.) without an image capturing device.

In the embodiment described above, the example where the present invention is applied to a videoconference system has been described; however, the application is not limited to this. That is, the present invention is applicable to any use as long as the object is to decrease the image quality of a partial region in video data to thereby reduce the data amount. The present invention is applicable also to an image processing apparatus that does not encode or decode video data.

In the embodiment described above, although a face detection region is described as an example of "specific region", "specific region" is not limited to this. That is, "specific region" may be any region as long as the region includes an object for which a relatively high image quality is desirable (for example, text or images presented by a document or a whiteboard, a person in a video image captured by a monitoring camera, etc.).

In the embodiment described above, various set values used in the processing (for example, an object to be detected in a specific region, the sizes of the specific region and the boundary part, the set value of the image quality of the region of each image quality type, the size of the block used in motion determination, the thresholds th1 and th2, the area of the reference blocks, etc.) may be set in advance to any desirable values or may be set by a user to any desirable values using an information processing apparatus (for example, a PC, etc.) provided with a user interface.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An image processing apparatus (100) comprising:
an image obtaining unit (122) configured to obtain a video image;
a specific-region detecting unit (126) configured to detect a specific region in the video image; and
an image processing unit (124) configured to:
make an image quality of a region other than the specific region in the video image lower than an image quality of the specific region; and
make an image quality of a boundary part between the specific region and the other region in the video image lower than the image quality of the specific region and higher than the image quality of the other region.

2. The image processing apparatus (100) according to Claim 1, wherein the image processing unit (124) makes the image quality of the boundary part to decrease toward the other region in a stepwise manner.

3. The image processing apparatus (100) according to Claim 1 or 2, wherein
the specific-region detecting unit (126) includes
a motion region detecting unit (126A) configured to detect a motion region in the video image as the specific region.

4. The image processing apparatus (100) according to any one of Claims 1 to 3, wherein
the specific-region detecting unit (126) further includes
a face region detecting unit (126B) configured to detect a face region in the video image as the specific region.

5. The image processing apparatus (100) according to Claim 4, wherein
the specific-region detecting unit (126) is configured to
detect as the specific region a region that is not detected as the face region by the face region detecting unit (126B) but has just been detected as the face region.

6. The image processing apparatus (100) according to any one of Claims 1 to 5, wherein
the image processing unit (124) is configured to decrease the image quality of the other region and the image quality of the boundary part in a stepwise manner over time.

7. The image processing apparatus (100) according to any one of Claims 1 to 6, further comprising:
an encoding unit (128) configured to encode the video image after processing by the image processing unit (124); and
a transmitting unit (130) configured to transmit the video image encoded by the encoding unit (128) to an external apparatus.

8. The image processing apparatus (100) according to any one of Claims 1 to 7, further comprising:
an image capturing device (101) configured to capture the video image; and
the transmitting unit (130) configured to communicate with one or more image processing apparatuses to carry out videoconference.

9. A videoconference system (10) comprising:
a plurality of communication terminals, at least one of the plurality of communication terminals being the image processing apparatus (100) according to Claim 8; and
a server apparatus (12) configured to perform control operations related to a videoconference held by the plurality of communication terminals.

10. An image processing method comprising:
obtaining a video image;
detecting a specific region in the video image; and
processing the video image to make an image quality of a region other than the specific region in the video image lower than an image quality of the specific region,
the processing of the video image including
making an image quality of a boundary part between the specific region and the other region in the video image lower than the image quality of the specific region and higher than the image quality of the other region.

11. A carrier means carrying computer readable code for controlling a computer system (105) to carry out the method of Claim 10.
